# EUROPEAN PATENT APPLICATION

(11) **EP 4 129 046 A1**
(43) Date of publication of application: **08.02.2023**
(21) Application number: 22186050.5
(22) Date of filing: 20.07.2022
(51) Int. Cl.: A01F 15/07

(54) **BALING APPARATUS**

(30) Priority: 02.08.2021 US 202163203854 P
(71) Applicant: Agco Corporation, Duluth, Georgia 30096 (US)
(72) Inventor: ALEXANDER, Richard Lee, Hesston, 67062-0969 (US); Weller, Lucas Andrew, Hesston, 67062 (US); WALKER, Justin, Hesston, 67062-0969 (US)
(74) Representative: AGCO Intellectual Property Department

(57) **Abstract**

A duck bill assembly for a round baler is disclosed comprising first and second opposed elongate plates, the opposed elongate plates being directed towards one another so as to grip a portion of a wrapping material between the opposed elongate plates, wherein a portion of the first of the opposed elongate plates is formed of a manually displaceable material. This has as an advantage that the act of threading wrapping material into and through the duck bill assembly simply entails pulling the manually displaceable portion away from the opposing elongate plate, and dropping the wrapping material between the two elongate plates.

## Description

### FIELD OF THE INVENTION

The present invention relates to a baling apparatus and in particular to a baling apparatus for producing round bales in which the wrapping material is introduced into a baling chamber by way of a duckbill assembly.

### BACKGROUND

Cut crop is picked up by a baler and directed into a baling chamber where a bale is formed. Before ejecting the formed bale from the baler it is desirable to bind or wrap the bale prior to ejection from the baling chamber in order to maintain the integrity of the formed bale as it is ejected from the baler.

For this purpose, the baler is further provided with a roll of wrapping material and a feed apparatus configured to convey wrapping material from the roll of wrapping material to the baling chamber. The wrapping material may take any suitable form, for example net wrap is a common wrapping material. It is common for the feed apparatus to include a duck bill assembly to hold the wrapping material during the baling process, and once a bale is of suitable size introduce a leading edge of the wrapping material into the baling chamber. It will be appreciated that the wrapping material is a consumable product and that at regular intervals an operator needs to install a new roll of wrapping material and feed the wrapping material through the feed apparatus and into the duck bill assembly.

Typically, the most difficult part of threading a new roll of wrapping material is inserting the wrapping material into the duck bill itself. This is due to the inherent design of the duck bill being two pieces of metal or other hard material arranged in a narrow 'V' shape that is difficult for an operator to displace manually. The usual workaround for this difficulty has been either some kind of long, flat tool that allows the operator to 'push' the wrapping material into the duckbill, or some kind of mechanism built into the duckbill system that pushes the wrapping material into the duckbill. A long flat tool, while simple enough, can be lost or forgotten by an operator in the field. The use of an additional mechanism prevents such loss, but is typically a more costly component and adds weight and complexity to the feed apparatus.

It is an advantage of the present invention that it provides the operator with a way more easily to thread a leading edge of the wrapping material, and do so without providing additional tools or mechanisms.

### SUMMARY OF THE INVENTION

According to a first aspect of the present invention, a duck bill assembly for a round baler comprises first and second opposed elongate plates, the opposed elongate plates being directed towards one another so as to grip a portion of a wrapping material between the opposed elongate plates, wherein a portion of the first of the opposed elongate plates is formed of a manually displaceable material.

Preferably the manually displaceable material extends across a part of the width of the first of the opposed plates. More preferably the manually displaceable material extends across an entire width of the first of the opposed plates.

Preferably the manually displaceable material of the first of the opposed elongate plates comprises a plastics material. More preferably the manually displaceable material of the first of the opposed elongate plates comprises a sheet rubber material.

Preferably a portion of the second of the opposed elongate plates is formed of a manually displaceable material.

Preferably, the manually displaceable material extends across a part of the width of the second of the opposed elongate plates. More preferably the manually displaceable material extends across the entire width of the second of the opposed elongate plates.

Preferably the manually displaceable material of the second of the opposed elongate plates comprises a plastics material. More preferably the manually displaceable material of the second of the opposed elongate plates comprises a sheet rubber material.

According to a second aspect of the invention a wrapping material conveyor apparatus comprises a duck bill assembly according to a first aspect of the invention moveable between a retracted position in which a free end of a length of a wrapping material is gripped between the opposing plates and an advanced position in which the free end of the wrapping material is introduced into a baling chamber and the free end of the wrapping material is drawn into the baling chamber and a cutting apparatus adjacent the duck bill assembly adapted to move between a first position and a second position so as to sever the length of wrapping material at the end of a wrapping operation prior to the duck bill assembly moving from the advanced position to the retracted position.

According to third aspect of the present invention a round baler comprises a bale forming chamber, a reservoir for a wrapping material, a duck bill assembly according to the first aspect of the invention moveable between a retracted position in which a free end of a length of the wrapping material is gripped between the opposing plates and an advanced position in which the free end of the wrapping material is introduced into a baling chamber and the free end of the wrapping material is drawn into the baling chamber and a cutting apparatus adjacent the duck bill assembly adapted to move between a first position and a second position so as to sever the length of wrapping material at the end of a wrapping operation prior to the duck bill assembly moving from the advanced position to the retracted position.

This has as an advantage that the act of threading the wrapping material into and through the duck bill assembly becomes a simple act of pulling the manually displaceable portion away from the opposing plate, and dropping the wrapping material between the two plates. The manually displaceable portion does not need to extend the full width of the duck bill assembly, and only needs to be flexible where it is most accessible to the operator for threading of the wrapping material.

### BRIEF DESCRIPTION OF THE DRAWINGS

The invention will now be described, by way of example only, with reference to the accompanying drawings, in which:
Figure 1 shows a schematic side section of elements of a round baler incorporating a duck bill assembly in accordance with a first aspect of the invention;
Figure 2 shows a side view of the assembly shown in Figure 1;
Figure 3 shows a side view similar to Figure 2 in which a side panel has been removed for clarity;
Figure 4 shows an isometric section of the assembly of Figure 3;

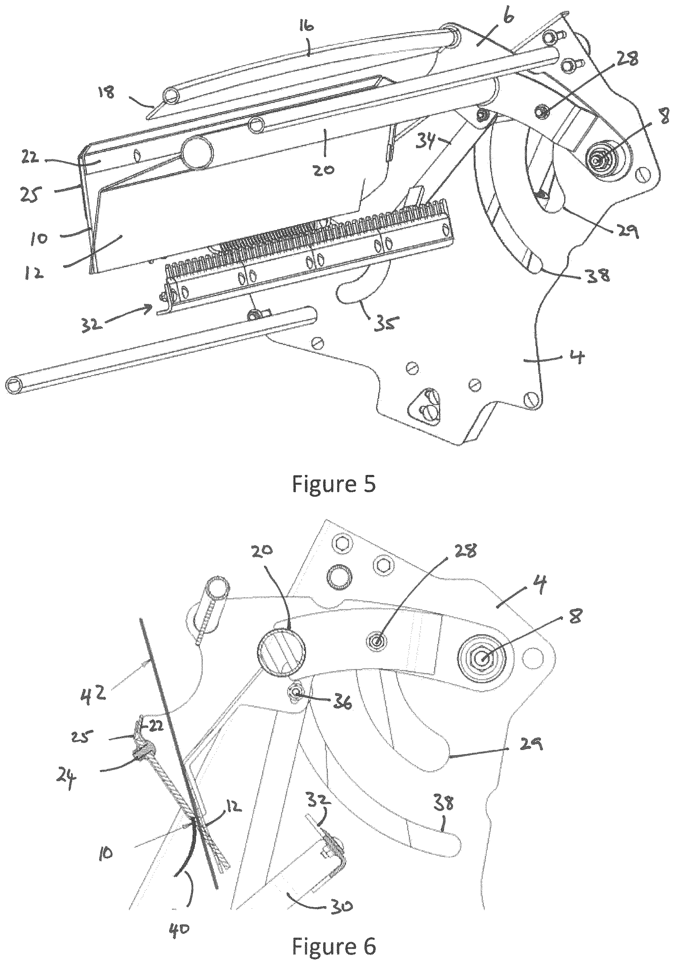

Figure 5 shows a partial isometric section of the assembly of Figure 1; and
Figure 6 shows a side section similar to Figure 1 in which a portion of one of the opposed plates is shown in a displaced position.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

Reference to terms such as longitudinal, transverse and vertical are made with respect to a longitudinal vehicle axis which is parallel to a normal forward direction of travel. Reference to a height is to a distance of the element from the ground with the apparatus on a level surface.

With reference to the Figures, various views of elements of a feed apparatus configured to convey a wrapping material from the wrapping material reservoir to the baling chamber can be seen. Not all elements are visible in all of the Figures, certain elements having been omitted in certain views to provide clarity. It will be understood that the feed apparatus is substantially symmetrical about the longitudinal axis of the baler, and, as such, only one side of the feed apparatus is described.

A pivoting duck bill assembly 2 is mounted on a baler frame 4. The duck bill assembly 2 comprises a frame having left and right hand substantially L-shaped side members 6 designed in use to allow passage of a wrapping material 42 between them. The duck bill assembly 2 is connected to the baler frame 4 for movement around a pivot axis 8 extending through upper ends of the L-shaped side members 6. The distal end of the duck bill assembly 2 is provided with a duck bill comprising first and second opposing laterally elongate plates 10,12. The opposing plates 10,12 extend laterally across the duck bill assembly 2 between the L-shaped side members 6. In a ready position the wrapping material 42 is held between the opposing plates 10,12, with a free end of the wrapping material 42 supported on and extending a short distance from the duck bill assembly 2.

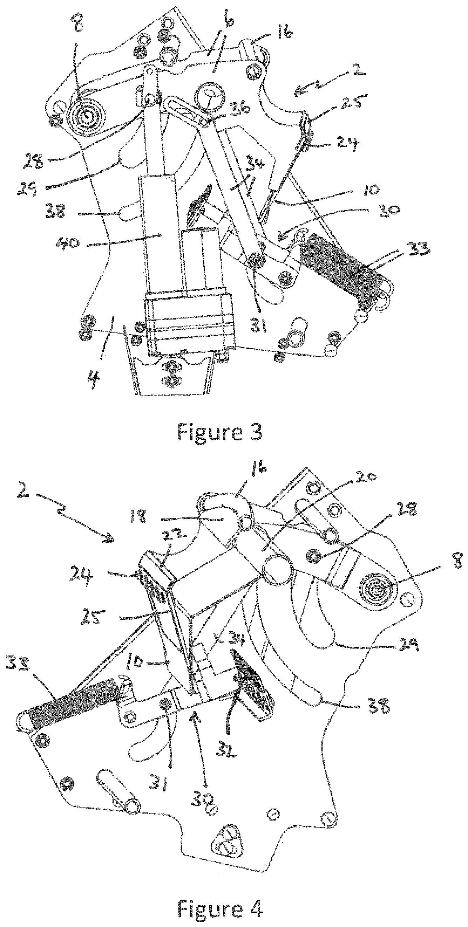

The distal end of the duck bill assembly 2 is further provided with a mounting 22 extending laterally across the duck bill assembly 2. The first of the opposing plates 10 is secured to the mounting 22 in any suitable manner, for example by use of rivets or other suitable fasteners 24. The first of the opposing plates 10 is provided in the form of a manually displaceable member, that is a member of sufficient flexibility so as to be deflected manually by an operator. Conveniently, the first of the opposing plates is manufactured, in whole or in part, from a rubber sheet material. Preferably, a cover member 25 is secured by the fasteners 24 to one side of the first of the opposing plate 10 so as to cover an upper portion of the first of the opposing plates 10 (as best seen in Figure 4).

A central outer region of the L-shaped side members 6 is connected by a cross element 16 supporting an upper wrapping material guide plate 18. A central inner region of the L-shaped side members 6 is connected by a tubular structural member 20. The second of the opposing plates 12 runs from an outer surface of the tubular structural member 20 between the L-shaped side members 6 to a distal end of the duck bill assembly 2.

The first and second plates 10,12 are arranged such that they are angled toward one another such that at least a portion of the first elongate plate 10 is in contact with at least a portion of the second elongate plate 12. In practice an operator passes a wrapping material 42 between these portions, as described below, such that the wrapping material 42 is held in place, that is gripped, between these portions of the first and second elongate plates 10,12 with sufficient force to retain the wrapping material in place while the duck bill assembly is moved toward the baling chamber, but nevertheless allowing the wrapping material be drawn through the duckbill assembly 2 once a leading edge of the wrapping material has been drawn into the baling chamber to wrap a bale within the baling chamber.

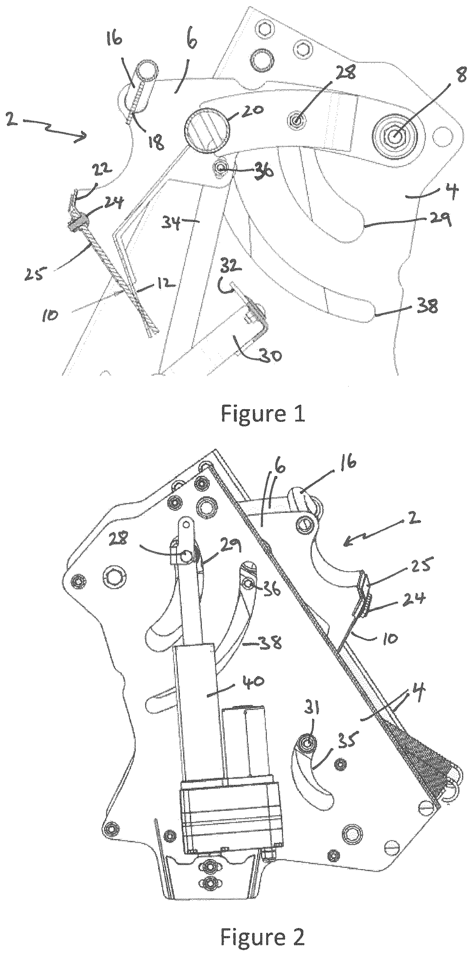

An actuator 40 is provided to one side of the baler frame 4 (as best seen in Figures 2 and 3). A distal end of the actuator is provided with a mounting connecting the distal end of the actuator to one or both L-shaped side members 6, for example by a bar 28 connected to one of the L-shaped members 6 and having at least one end adapted for movement within an arcuate opening 29 provided in the baler frame 4. In an alternative embodiment, the bar 28 also extends between the L-shaped members 6.

A biased cutting element 30 is also provided mounted for pivoting movement about a pivot bar 31 extending across the baler frame 4. The biased cutting element 30 comprises a frame having side elements connected at a first end by a cutting knife 32. A biasing element 33, such as springs, is provided between a mounting point provided on the baler frame 4 and a second end of the biased cutting element 30.

A connecting element 34 is provided between the duck bill assembly 2 and the biased cutting element 30 to one side of these elements. A first end of the connecting element 30 is secured to the pivot bar 31 supporting the cutting element 30. The ends of the pivot bar 31 are constrained for movement within arcuate channels 35 defined in the baler frame 4. A second end of the connecting element is connected to a pin 36 connecting to one the side elements 6, the pin being constrained for movement within an arcuate opening 38 in the baler frame 4.

In the illustrated embodiment, the act of threading the wrapping material comprises the relatively simple act of pulling the first plate 10 in the region of the manually displaceable portion 40 away from the second plate 12, and dropping the wrapping material 42 between the first and second plates 10,12. When the first plate 10 is released, it flexes back against the second plate 12 to grip the wrapping material 42 between the first and second plates 10,12. The manually displaceable portion 40 does not need to extend the full width of the duck bill assembly 2, and only needs to be provided where it is most accessible to the operator, for example towards the central longitudinal axis of the baler.

The first plate 10 can comprise a combination of rigid and manually displaceable materials. Alternatively, the first plate 10 may be constructed entirely of a manually displaceable material. In such an embodiment additional supports, such as cover member 25, may be provided to keep critical areas in appropriate positions.

Once threading of the wrapping material though the duck bill assembly 2 is completed, the manually displaceable portion of the first plate 10 tends towards its initial position, and is able to hold the wrapping material 42 tightly enough in the duck bill assembly 2 so that the wrapping material is not unintentionally pulled out of the duck bill assembly 2, for example when the duck bill assembly 2 is being introduced into a baling chamber of the baler.

In a further embodiment each of the first and second plates 10,12 may be formed with at least one region of manually displaceable material.

Unrelated to ease of threading the wrapping material 42, if the leading edge of the second plate is also formed of a manually displaceable material this also has the added benefit of enabling a leading edge of the duck bill assembly 2 to be inserted further into the baling chamber of the baler without damaging the duck bill assembly 2. This allows the wrapping cycle to start more reliably since the wrapping material 42 protruding from the end of the duck bill assembly 2 may be forced into closer proximity to a bale to be wrapped within the baling chamber.

From reading the present disclosure, other modifications will be apparent to persons skilled in the art. Such modifications may involve other features which are already known in the field of round balers and component parts therefore and which may be used instead of or in addition to features already described herein.

## Claims

1. A duck bill assembly for a round baler comprises first and second opposed elongate plates, the opposed elongate plates being directed towards one another so as to grip a portion of a wrapping material between the opposed elongate plates, wherein a portion of the first of the opposed elongate plates is formed of a manually displaceable material.

2. A duck bill assembly according to claim 1, wherein the manually displaceable material extends across a part of the width of the first of the opposed plates.

3. A duck bill assembly according to claim 1, wherein the manually displaceable material extends across an entire width of the first of the opposed plates.

4. A duck bill assembly according to any of claim 1 to claim 3, wherein the manually displaceable material of the first of the opposed elongate plates comprises a plastics material.

5. A duck bill assembly according to any of claim 1 to claim 4, wherein the manually displaceable material of the first of the opposed elongate plates comprises a sheet rubber material.

6. A duck bill assembly according to any of claim 1 to claim 5, wherein a portion of the second of the opposed elongate plates is formed of a manually displaceable material.

7. A duck bill assembly according to claim 6, wherein the manually displaceable material extends across a part of the width of the second of the opposed elongate plates.

8. A duck bill assembly according to claim 6, wherein the manually displaceable material extends across the entire width of the second of the opposed elongate plates.

9. A duck bill assembly according to any of claim 6 to claim 8, wherein the manually displaceable material of the second of the opposed elongate plates comprises a plastics material.

10. A duck bill assembly according to any of claim 6 to claim 9, wherein the manually displaceable material of the second of the opposed elongate plates comprises a sheet rubber material.

11. A wrapping material conveyor apparatus comprising a duck bill assembly according to any of claim 1 to claim 10 moveable between a retracted position in which a free end of a length of a wrapping material is gripped between the opposing plates and an advanced position in which the free end of the wrapping material is introduced into a baling chamber and the free end of the wrapping material is drawn into the baling chamber and a cutting apparatus adjacent the duck bill assembly adapted to move between a first position and a second position so as to sever the length of wrapping material at the end of a wrapping operation prior to the duck bill assembly moving from the advanced position to the retracted position.

12. A round baler comprising a bale forming chamber, a reservoir for a wrapping material, a duck bill assembly according to any one of claim 1 to claim 10 moveable between a retracted position in which a free end of a length of the wrapping material is gripped between the opposing plates and an advanced position in which the free end of the wrapping material is introduced into a baling chamber and the free end of the wrapping material is drawn into the baling chamber and a cutting apparatus adjacent the duck bill assembly adapted to move between a first position and a second position so as to sever the length of wrapping material at the end of a wrapping operation prior to the duck bill assembly moving from the advanced position to the retracted position.
